# EUROPÄISCHE PATENTSCHRIFT

(11) **EP 0 560 752 B1**
(45) Veröffentlichungstag und Bekanntmachung des Hinweises auf die Patenterteilung: **21.02.1996**
(21) Anmeldenummer: 93890040.4
(22) Anmeldetag: 10.03.1993
(51) Int. Cl.: F26B 3/32, C05F 17/00

(54) **Verfahren zur Beeinflussung des Verlaufes von unter Wärmeentwicklung stattfindenden Abbau- und Umwandlungsprozessen von Grünanteile enthaltenden biologischen Substanzen**
Process to influence the course of the heat releasing degradation and transformation of biological substances containing green matter
Procédé pour influencer le cours de la transformation et de la dégradation de substances biologiques contenant des matériaux verts avec production de chaleur

(30) Priorität: 11.03.1992 AT 473/92
(43) Veröffentlichungstag der Anmeldung: 15.09.1993
(73) Patentinhaber: Berger, Josef, A-4760 Raab (AT); Kloimstein, Helmut, Mag., A-4020 Linz (AT)
(72) Erfinder: Berger, Josef, A-4760 Raab (AT); Kloimstein, Helmut, Mag., A-4020 Linz (AT)
(74) Vertreter: Hübscher, Heiner, Dipl.-Ing.

(56) Entgegenhaltungen:
- EP-A- 0 316 294
- WO-A-90/12893
- WO-A-91/10631

## Beschreibung

Die Erfindung betrifft ein Verfahren zur Beeinflussung des Verlaufes von unter Wärmeentwicklung stattfindenden Abbau- und Umwandlungsprozessen von Grünanteile enthaltenden biologischen Substanzen, die gegebenenfalls unter Pressung zu einem Haufen bzw. Stapel geschichtet oder in einem Behälter untergebracht werden, insbesondere von gestapeltem Heu, nur vorgetrocknetem in ein Silo eingefülltem Getreide und von in einer Reaktionskammer unter Ausnützung der beim Umwandlungsprozeß zugesetzter Grünmasse entstehenden Wärme einem Trocknungsprozeß unterzogenen Hackschnitzeln.

Ein derartiges Verfahren ist, zum Beispiel, aus der AT-A-391 648 bekannt.

Beispiele für negative Auswirkungen der erwähnten Abbau- und Umwandlungsprozesse sind die bekannte vielfach unkontrolliert und unerwartet auftretende Überhitzung bzw. Selbstentzündung von Heustapeln sowie fallsweise in Getreidesilos auftretende Erhitzungs- und Umwandlungsprozesse im gelagerten Gut, durch die dieses Gut zum Teil zerstört oder so verändert wird, daß es für die gedachte Weiterverwendung unbrauchbar wird. Bisher wurde versucht, unerwünschte Wärmeentwicklungen in den genannten Fällen dadurch zu vermeiden, daß die Stapelgröße begrenzt bzw. für eine ausreichende Durchlüftung der Stapel oder Silos gesorgt wurde. Bei Heustapeln ist es bekannt, bei der Bildung des Stapels Zwischenschichten oder Zwischenlagen aus Stroh vorzusehen, über die leichter Luft in den Kern des Stapels eindringen und damit die zur Überhitzung führenden Prozesse verhindern kann. Ferner sind mit Temperaturfühlern ausgestattete Meßsonden bekannt,die in den Stapel eingeführt werden und eine Überhitzung anzeigen, wobei in solchen Fällen als Gegenmaßnahme falls vorhanden über Belüftungseinrichtungen eine Durchlüftung des Stapels vorgenommen oder der Stapel sicherheitshalber abgetragen und das Heu bis zur Fertigtrocknung ausgebreitet wird. Selbstverständlich sind alle diese Sicherungsmaßnahmen aufwendig und nicht immer verläßlich.

Ein Beispiel für eine positive Ausnützung der Wärmeentwicklung bei solchen Umwandlungsprozessen ist die mögliche Ausnützung der Reaktionswärme für die Trocknung von Hackschnitzeln, wie dies in der AT-PS 391 648 beschrieben wird. Bei diesem Verfahren wird von Bäumen oder Sträuchern stammendes Holz in grünem Zustand zu Hackschnitzeln zerkleinert und unter Beigabe von Grünanteilen die aus der Rinde bzw. dem Laub der Bäume selbst, aber auch von Blattpflanzen oder Gras stammen können, in eine Reaktionskammer eingefüllt und vorgepreßt, wobei die Reaktionskammer wenigstens nach dem Boden und nach den Seiten hin den Stapel luftdicht abschließt, vorzugsweise auch ein weitgehender Luftabschluß nach oben vorgesehen wird und in der Decke oder in einem oder mehreren durch den gebildeten Stapel führenden Abzugsschächten die entstehenden Gase und der ausgetriebene Wasserdampf abgeleitet werden. Nach dem beschriebenen Verfahren konnten sehr günstige Trocknungsergebnisse für die Hackschnitzel erzielt werden. Es wird angenommen, daß der Trocknungsprozeß zunächst unter einem aeroben Abbau der Grünanteile eingeleitet wird, wonach nach Verbrauch des Luftsauerstoffes im wesentlichen ein anaerober Umwandlungsprozeß stattfindet, bei dem das Gut im Idealfall auf Temperaturen von 70 bis 80° C und darüber erwärmt und die Feuchtigkeit dabei ausgetrieben wird. Bei zu hohem Grünanteil oder ungleichmäßiger Durchmischung des Hackgutes mit der Grünmasse kann es zu Überhitzungen kommen, die zu einer Art Verkohlung der in diesem Bereich befindlichen Hackschnitzel und der entsprechenden Grünmasse führen.

Aus der AT-PS 98 252 und der DE-PS 495 244 sind Verfahren zur Haltbarmachung von saftigen Futtermitteln pflanzlicher Art mittels des elektrischen Stromes bekannt. Bei diesen bekannten Verfahren werden saftige, für die Silage geeignete Futtermittel in einen mit einer Metallauskleidung versehenen Behälter eingebracht und durch Pressung und Verletzung der Außenhaut elektrisch leitend gemacht. In das Futter werden Elektroden in Form von Lanzen, die gegebenenfalls auch als Schraublanzen ausgeführt sein können, eingesenkt und es wird eine elektrische Spannung zwischen den Elektroden oder den Elektroden und der Metallauskleidung angelegt, um einen durch die Futtermittel fließenden Strom zu erzeugen, durch den vor allem eine Erwärmung der Silage und damit eine Beschleunigung des Siliervorganges erzielt werden soll. Nach einer Variante ist vorgesehen, die Sonden hohl auszubilden und in ihnen Vorwiderstände zu verlegen, wobei durch entsprechende Umschaltung die Möglichkeit geschaffen wird, entweder einen unmittelbaren Stromfluß zwischen Sonde und Metallauskleidung bzw. zwischen benachbarten Sonden mit stufenweiser Ein- oder Abschaltung der Vorwiderstände zu erzeugen oder den Strom nur über die Vorwiderstände zu leiten, so daß die Vorwiderstände als Heizleiter zur Vorwärmung der Sonde und damit zur reinen Erwärmung der Silage dienen. Mit den bekannten Vorrichtungen soll also die Aufgabe gelöst werden, Silage mit Hilfe des elektrischen Stromes schnell auf eine für die Silierung günstige Reaktionstemperatur zu bringen, wobei die Hauptvoraussetzung darin besteht, daß die Silage gut leitfähig ist. Der Widerstand soll im Verlauf von etwa 24 Stunden auf nahezu Null absinken. Im Gegensatz zu den eingangs beschriebenen Umwandlungsprozessen, bei denen es zu einer entweder unerwünschten oder für die Trocknung ausgenützten Wärmeentwicklung kommt bzw. kommen kann, handelt es sich bei der Futterkonservierung mit Hilfe des elektrischen Stromes um ein Verfahren, bei dem dem Siliergut Energie zugeführt wird, um die notwendige Betriebstemperatur zu erreichen.

Aufgabe der Erfindung ist die Schaffung eines Verfahrens der eingangs genannten Art, bei dem der Reaktionsprozeß mit einfachen Mitteln beeinflußt und eine unerwünschte Reaktion, insbesondere eine Überhitzung oder Selbstentzündung sicher verhindert werden kann.

Die gestellte Aufgabe wird prinzipiell dadurch gelöst, daß in die Substanz elektrisch leitende Elemente eingebracht werden und daß diese Elemente zur gezielten Unterbindung oder bedarfsweisen Herabsetzung von Wärmeentwicklungen mit einem Erdungsanschluß verbunden werden.

Versuche haben bestätigt, daß im Umfeldbereich der elektrisch leitenden Elemente bei Erdung dieser Elemente keine zu Überhitzungen führenden Reaktionen mehr auftreten, also die sonst unter Wärmeentwicklung stattfindende Reaktion verlangsamt oder unterbunden wird. Diese Tatsache läßt sich ohne Anspruch auf Vollständigkeit bzw. Richtigkeit der Theorie zu erheben, etwa wie folgt erklären:

Bei den eingangs beschriebenen Prozessen tritt zunächst eine aerobe Umwandlungsreaktion der Grünmasse unter Wärmeentwicklung auf. Wird dabei eine Starttemperatur der Substanzen erreicht, dann setzt, vielfach sprunghaft unter ganz oder teilweise anaeroben Bedingungen eine weitere Abbaureaktion für die Grünmasse ein, bei der es möglicherweise durch Katalyseeinwirkung zu einer Spaltung des Wassers in Wasserstoff- und Sauerstoffionen kommt bzw. mit dem Wasserdampf auch ionisierte Wasser- und Gasanteile ausgetrieben werden. Durch die elektrische Ladung der entsprechenden Teilchen kommt es bei der Bewegung dieser Teilchen und bei ihrer Entfernung von den entgegengesetzt geladenen, im Stapel oder Haufen verbleibenden Teilchen zum Auftreten elektrischer Ladungen, die, sobald die Spannung für das jeweilige Material und den Trocknungs- und Schichtungszustand kritische Werte übersteigt, elektrische Entladungen auslösen, die eine momentane starke Erwärmung des Überschlagsbereiches und des dort befindlichen Materials bedingen. Dies wäre auch eine Erklärung dafür, weshalb bei Heustöcken nach Selbstentzündungen oder Überhitzungen im Überhitzungsbereich Hohlräume mit stark verkohltem Material gefunden werden bzw. im Heustock vergessene Eisenteile oft vielfach stark verzogen und verformt sind, obwohl die normale Überhitzungstemperatur eines Heustockes vor dem Ausbrechen eines Brandes so niedrig ist, daß die Eisenteile keiner Verformung unterliegen dürften. Wenn man nun erfindungsgemäß durch Erdung die sonst entstehende Aufladung unterbindet, kann man auch die spontan unter Temperatursprung auftretenden Überhitzungsreaktion verhindern.

Die Tatsache, daß elektrische Aufladungen auftreten, wurde in der Praxis bei einem Versuch zur Hackschnitzeltrocknung bewiesen. Dabei waren in einem gegen Erde isolierten Reaktionsbehälter Hackschnitzel und Grünmasse enthalten und die Reaktion wurde eingeleitet. Um den Reaktionsverlauf besser überwachen zu können, waren in den Stapel Temperaturmeßsonden eingeführt und mit Temperaturmeßgeräten verbunden. Zunächst waren diese Sonden geerdet und es ergab sich die überraschende Tatsache, daß keine Trocknungsreaktion unter ausreichender Temperaturentwicklung stattfand, obwohl die Materialmischung und die übrigen Bedingungen, insbesondere die Starttemperatur jenen Bedingungen entsprachen, bei denen vorher problemlos Trockungsreaktionen erzielt worden waren. Nun wurden die Erdleitungen der Sonden unterbrochen und die Reaktion kam daraufhin überraschend in gewohnter Weise in Gang. Bei entsprechenden Versuchen wurden Funkenüberschläge von den Meßleitungen zu geerdeten Teilen erzielt, wodurch das Vorhandensein elektrischer Spannungen nachgewiesen war. Die erwähnt Reaktion konnte jederzeit durch Erdung der über den Stock verteilt angebrachten Sonden jeweils im Bereich einer einzelnen Sonden, aber auch durch Erdung aller Sonden im Gesamtbereich unterbrochen bzw. bei Überhitzungsgefahr eingebremst werden.

Unter Ausnützung der obigen Erkenntnisse wird nach einer Variante des erfindungsgemäßen Verfahrens vorgesehen, daß zum Schutze gelagerter oder gestapelter Substanzen in diese Substanzen, z. B. in einem aus Heu gebildeten Stapel, abstandsweise blanke Erdungsleiter in Form von Lanzen, Drähten, Seilen, Gittern oder Netzen eingelegt werden.

Zur Beeinflussung eines Trockungsprozesses werden in einem in einer Reaktionskammer gebildeten Stapel aus mit Grünmasse versetzten Hackschnitzeln Erdungssonden eingelegt, die Reaktionstemperatur und/oder die an den Sonden auftretenden elektrischen Spannungen werden überwacht und der Verlauf der Reaktion wird durch gezielte Erdungsverbindung der Sonden in deren Bereich die Temperatur bzw. Spannung vorgebbare Sollwerte übersteigt, beeinflußt. Es besteht hier die Möglichkeit, eine übergeordnete elektronische Steuereinrichtung zu verwenden, der die Meßwerte (Temperatur oder Spannung) der Sonden übermittelt werden und die gezielt jene Sonden an Erde schaltet, in deren Bereich vorbestimmte Sollwerte für die Temperatur bzw. Spannung überschritten werden. Im Bedarfsfall kann bei entsprechender Anordnung der Sonden durch gleichzeitige Erdung aller Sonden der Verlauf der Trockungsreaktion in der gesamten Kammer unterbunden oder wesentlich verlangsamt werden.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen
- Fig. 1: in schematischer Darstellungsweise einen in einem Lager-Bodenraum errichteten Heustock mit einer erfindungsgemäßen Sicherungseinrichtung und
- Fig. 2: eine Reaktioskammer zur Trocknung von Hackschnitzeln schematisiert im Längsschnitt.

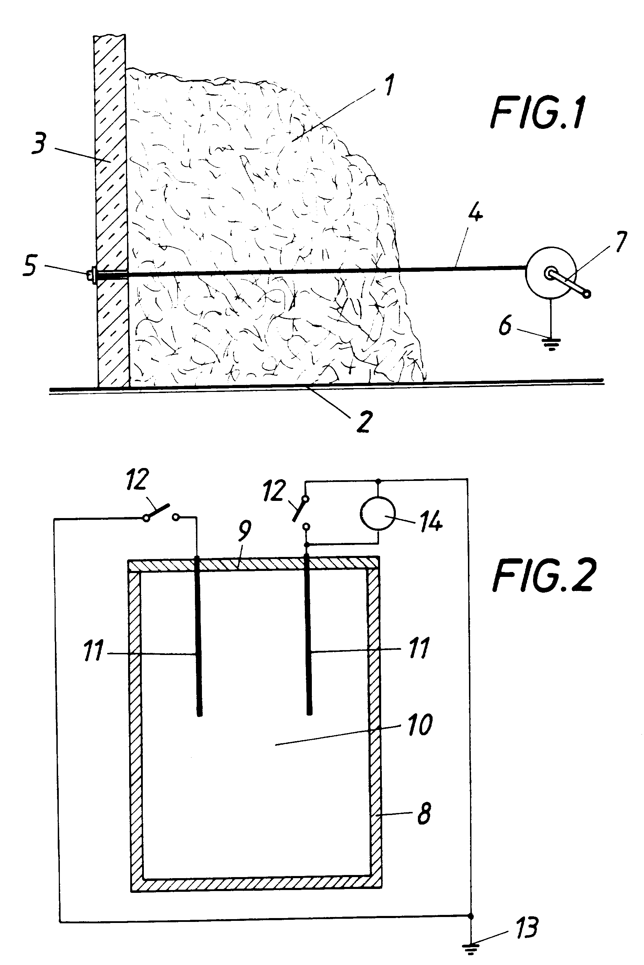

Nach Fig. 1 ist ein Vorrats-Heustock 1 am Boden 2 errichtet und wenigstens an einer Seite von einer Mauer 3 begrenzt. Zum Schutz des Heustockes vor Selbstentzündung sind durch den Heustock mehrere Erdungsseile 4 mit Abständen voneinander z. B. horizontal verlegt. Das eine Ende 5 jedes Seiles 4 ist durch die Mauer 3 geführt und mit einem Haltekopf versehen. Nach Lösen dieses Haltekopfes 5 kann das Seil 4, das bleibend mit einem Erdungsanschluß 6 verbunden ist, mittels einer Winde 7 herausgezogen und auf eine Vorratstrommel aufgewickelt werden.

Nach Fig. 2 besteht eine Reaktionskammer zur Trocknung von Hackschnitzeln aus einem aus Isoliermaterial hergestellten oder mit einer Innenisolierung versehenen bzw. elektrisch isoliert aufgestellten Behälter 8, der nach oben hin durch einen Deckel 9 mit nicht dargestelltem Auslaß für Gase und Wasserdampf verschließbar ist und im unteren Bereich eine ebenfalls nicht dargestellte Entnahmeöffnung für das Trockengut aufweist. Für die Trocknung wird der Behälterraum 10 mit einer Mischung aus in grünem Zustand gehackten Holzhackschnitzeln und Grünmasse gefüllt, wobei der Grünmasseanteil z. B. 10 Gew. % der Gesamtmasse beträgt. Der Feuchtigkeitsgehalt beträgt z. B. 60 Gew. %. Das Gut wird durch sein Eigengewicht und gegebenenfalls zusätzlich Pressung verdichtet. Durch eine aerobe Startreaktion findet ein Temperaturanstieg statt. Nach Verbrauch des Luftsauerstoffes geht die aerobe Reaktion in einen zum Großteil anaeroben Prozeß über, bei dem weiterhin Wärme entwickelt und die Feuchtigkeit aus den Hackschnitzeln ausgetrieben wird, wie dies auch in der AT-PS 391 648 beschrieben wurde.

Erfindungsgemäß ragen durch den Deckel 9 des Behälters 8 einige Sonden 11, bei denen wenigstens das im Behälterinnenraum liegende Ende blank ist. Die Sonden 11 können einzeln über Schalter 12 mit einem Erdungsanschluß 13 verbunden werden. Dabei ist es möglich, mit Hilfe von die offenen Schalter 12 überbrückenden Meßgeräten 14, insbesondere Ladungsmeßgeräten, an der Sonde auftretenden Spannungen bzw. Aufladungen festzustellen und die so erhaltenen Meßwerte als Parameter zur Erfassung des Ablaufes der Reaktion in der Kammer 10 zu werten. Übersteigen die Spannungen an den Sonden 11 bzw. die über eigene, nicht dargestellte Meßeinrichtungen feststellbaren Guttemperaturen im Bereich der einzelnen Sonden vorgegebene Sollwerte, dann werden die Schalter 12 gezielt geschlossen, wodurch die Reaktion gebremst bzw. beim Anschluß aller Sonden 11 an Erde zum Stillstand gebracht werden kann.

## Patentansprüche

1. Verfahren zur Beeinflussung des Verlaufes von unter Wärmeentwicklung stattfindenden Abbau- und Umwandlungsprozessen von Grünanteile enthaltenden biologischen Substanzen, die gegebenenfalls unter Pressung zu einem Haufen bzw. Stapel (1) geschichtet oder in einem Behälter (8) untergebracht werden, insbesondere von gestapeltem Heu, nur vorgetrocknetem, in ein Silo eingefülltem Getreide und von in einer Reaktionskammer (8) unter Ausnützung der beim Umwandlungsprozeß zugesetzter Grünmasse entstehenden Wärme einem Trocknungsprozeß unterzogenen Hackschnitzeln, dadurch gekennzeichnet, daß in die Substanz elektrisch leitende Elemente eingebracht werden und daß diese Elemente (4, 11) zur gezielten Unterbindung oder bedarfsweisen Herabsetzung von Wärmeentwicklungen mit einem Erdungsanschluß (6, 13) verbunden werden.

2. Verfahren nach Anspruch 1, dadurch gekennzeichnet, daß zum Schutze gelagerter oder gestapelter Substanzen in diese Substanzen, z. B. in einen aus Heu gebildeten Stapel (1), abstandsweise blanke Erdungsleiter in Form von Lanzen, Drähten, Seilen (4) Gittern oder Netzen eingelegt werden.

3. Verfahren nach Anspruch 1, dadurch gekennzeichnet, daß in einen in der Reaktionskammer (8) gebildeten Stapel aus mit Grünmasse versetzten Hackschnitzeln Erdungssonden (11) eingelegt, die Reaktionstemperatur und/oder die an den Sonden (11) auftretenden elektrischen Spannungen überwacht und der Verlauf der Reaktion durch gezielte Erdungsverbindung der Sonden, in deren Bereich die Temperatur bzw. Spannung vorgebbare Sollwerte übersteigt, beeinflußt wird.

## Claims

1. A method of influencing the course of decomposition and conversion processes of biological substances containing green constituents, such processes being accompanied by heat evolution and such substances being compressed if required to form a heap or stack (1) and accommodated in a container (8), such substances being more particularly stacked hay, cereals which have been only pre-dried and introduced into a silo, and forage cuttings subjected to a drying process in a reaction chamber (8) using the heat arising during the conversion process of the added green material, characterised in that electrically conductive elements are introduced into the substance and in that said elements (4, 8) are connected to an earthing connection (6, 13) for the controlled suppression or, if necessary, reduction of heat evolution.

2. A method according to claim 1, characterised in that for the purpose of protecting stored or stacked substances there are placed in such substances, e.g. in a stack (1) of hay, spaced bare earthing conductors in the form of lances, wires, cables (4), grids or networks.

3. A method according to claim 1, characterised in that earth probes (11) are introduced into a stack of forage cuttings mixed with the green material, such stack being formed in the reaction chamber (8), the reaction chamber and/or the voltages occurring at the probes (11) are monitored and the course of the reaction is influenced by controlled earthing of the probes in the region of which the temperature or voltage exceeds predetermined set-values.

## Revendications

1. Procédé pour influer sur l'évolution de processus de dégradation et de conversion, qui ont lieu avec dégagement de chaleur, de substances biologiques contenant des parties vertes, qui éventuellement sont disposées en couches, sous compression, pour donner une meule ou un tas (1), ou encore sont placées dans un récipient (8), en particulier de foin en meule, de céréales n'ayant subi qu'un préséchage, placées dans un silo, et de fourrage haché, soumis à une opération de séchage dans une chambre de réaction (8), par utilisation de la chaleur dégagée par le processus de conversion de la masse verte ajoutée, caractérisé en ce qu'on place dans la substance des éléments conducteurs de l'électricité, et que ces éléments (4, 11) sont, pour assurer une suppression spécifique ou si nécessaire une diminution des dégagements de chaleur, connectés à une prise de terre (6, 13).

2. Procédé selon la revendication 1, caractérisé en ce que, pour assurer la protection de substances stockées ou entassées, on insère dans ces substances, par exemple dans une meule (1) constituée de foin, des conducteurs de mise à la terre, dénudés à certains intervalles, sous forme de lances, de fils, de câbles (4), de treillis ou de grilles.

3. Procédé selon la revendication 1, caractérisé en ce qu'on insère des sondes de mise à la terre (11) dans une meule, formée dans la chambre de réaction (8), constituée du fourrage haché additionné de la masse verte ; que l'on surveille la température de réaction et/ou les tensions électriques apparaissant au niveau des sondes (11); et que l'on agit sur le déroulement de la réaction en connectant d'une manière spécifique à la terre les sondes dans la zone desquelles la température ou la tension dépasse des valeurs de consigne prédéfinies.
